# EUROPEAN PATENT SPECIFICATION

(11) **EP 1 285 810 B1**
(45) Date of publication and mention of the grant of the patent: **07.11.2007**
(21) Application number: 02255435.6
(22) Date of filing: 02.08.2002
(51) Int. Cl.: B60N 2/28

(54) **Child safety seat**
Kindersicherheitssitz
Siège de sécurité pour enfant

(30) Priority: 21.08.2001 GB 0120247; 15.10.2001 GB 0124640
(43) Date of publication of application: 26.02.2003
(73) Proprietor: Britax Excelsior Limited, Marlborough Wiltshire SN8 1AL (GB)
(72) Inventor: Burleigh, David William, Bognor Regis, West Sussex PO21 4XN (GB); Carine, David Shaun, Andover, Hampshire SP11 6DF (GB)
(74) Representative: Ablett, Graham Keith

(56) References cited:
- EP-A- 0 200 411
- EP-A- 0 295 838
- EP-A- 0 326 265
- EP-A- 0 554 807
- EP-A- 0 732 235
- EP-A- 0 805 066
- EP-A- 1 006 017
- WO-A-01/34428
- DE-A- 2 712 917
- US-A- 5 630 645

## Description

This invention relates to a child safety seat for use in a vehicle of the type comprising a seat body including a seat portion and a seat back, and a link member for connecting the seat body to a vehicle body. The link member may comprise a guide adapted to be engaged by a vehicle seat belt. Alternatively, the link member may comprise a flexible or rigid coupling adapted to engage with anchorages on the vehicle body.

A child safety seat with the features of the preamble of claim 1 is known from WO-A-01/34428 which discloses a child safety seat with an adjustable strap and describes a method of connecting the top tether to the harness of the child safety seat. DE-A-27 12 917 discloses a child safety seat with an adjustable strap, the strap being adjustable by means of a directly mounted harness adjuster.

Frequently, it is difficult for a child's body to be positioned in a child seat in conditions that are optimum in the event of an accident. For example, if the child seat has a child harness (such as is disclosed in EP-A-0295838), it is desirable for the harness to be as tight as possible. In practice, users do not tighten the harnesses of child seats sufficiently for optimum performance. In addition, the straps of such harnesses are liable to stretch during an accident.

Similarly, in the case of a rearward-facing seat for an infant (such as is disclosed in EP-A-1006017), the optimum position in the event of an accident is to have the seat back in a relatively upright position. In normal use, a more reclined position is preferred because it provides better support for the infant's head and because it is more conducive to sleep.

It is an object of this invention to provide a child safety seat in which these disadvantages are mitigated.

The present invention is distinguished from the prior art in that movement of the link member relative to the seat body, occurring in the event of an accident involving the vehicle, is automatically operative to cause movement of the part of the child seat relative to the child seat body so as to put the child seat in a better condition to protect a child occupant.

Drive means may be arranged to act on said part of the child seat in response to movement of the link member relative to the seat body.

In one form of the invention the drive means is arranged to cause tightening of the child harness.

In another from of the invention, the drive means is arranged to cause movement of at least part of the seat back relative to the seat body.

The link member may be a flexible strap.

When the invention is applied to a child safety seat of the type adapted to be secured on a vehicle seat by a three-point seat belt, the function of the link member may be performed by the shoulder strap of the three-point belt or by a separate upper tether strap.

The drive means may include a cylindrical member journaled for rotation about a horizontal axis located behind the seat back and having diametrically extended slots through which the shoulder straps of the child harness project. In normal use, these slots are oriented so as to be substantially parallel to the normal path of such shoulder straps. In the event of an accident, the strap connected to the vehicle is arranged to cause rotation of the cylindrical member so as to wind the shoulder straps of the child harness therearound.

The coupling between the strap connected to the vehicle and the cylindrical member may comprise a pulley mounted on one end of the cylindrical member and secured for simultaneous rotation therewith. The pulley has a diametrically extending slot through which the strap connected to the vehicle extends. In normal use, this slot is at right angles to the normal path of such strap so that when a tightening force is applied to the strap, it tends to cause rotation of the pulley and the cylindrical member.

In another form of the invention, the strap connected to the vehicle is secured in a clamp which is attached to the child seat by a frangible link which is arranged to yield in the event of an accident. The clamp is also connected to a flexible member such as a steel wire which is wrapped around a pulley on the cylindrical member.

In the event that the frangible link breaks, the steel wire causes rotation of the cylindrical member as the clamp is pulled away from the child seat.

The invention is applicable both to forward-facing and to rearward-facing child seats. It has particular application to vehicles in which the vehicle seat belts are equipped with pyrotechnic tensioners.

Embodiments of the invention will now be described, by way of example, with reference to the accompanying drawings, in which:
Figure 1 is a rear elevation of a child seat in accordance with the first embodiment of the invention;
Figure 2 is a side view of the child seat shown in Figure 1;
Figure 3 is a cross-sectional view taken on the line 3-3 in Figure 1;
Figure 4 is a rear elevation of a child seat in accordance with a second embodiment of the invention;
Figure 5 is a side view of the child seat shown in Figure 4;
Figure 6 is a rear elevation of a child seat in accordance with a third embodiment of the invention;
Figure 7 is a side view, similar to Figure 2 of a child seat in accordance with a fourth embodiment of the invention;
Figure 8 is a longitudinal cross-sectional view taken on the centre line of a child seat in accordance with a fifth embodiment of the invention prior to an accident;
Figure 9 is a longitudinal cross-sectional view taken on the centre line of the child seat shown in Figure 8, after an accident;
Figure 10 is a side view of a child seat in accordance with a sixth embodiment of the invention;
Figure 11 is a longitudinal cross-sectional view taken on the centre line of a child seat in accordance with a seventh embodiment of the invention prior to an accident;
Figure 12 is a longitudinal cross-sectional view taken on the centre line of the child seat shown in Figure 11, after an accident;
Figure 13 is a longitudinal cross-sectional view taken on the centre line of a child seat in accordance with an eighth embodiment of the invention prior to an accident; and
Figure 14 is a longitudinal cross-sectional view taken on the centre line of a child seat in accordance with a ninth embodiment of the invention prior to an accident.

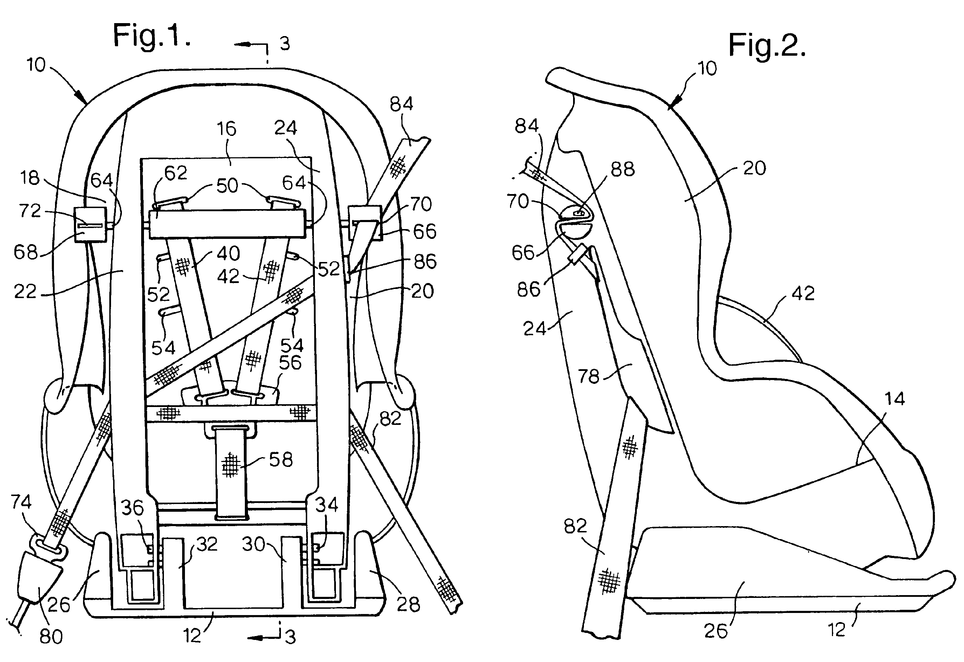

Referring to Figures 1 to 3, a child safety seat comprises a body 10 and a base 12. The body 10 is formed as a one-piece plastics moulding and has a seat portion 14, seat back portion 16 and side walls 18 and 20. Respective reinforcing beams 22 and 24 project downwardly and rearwardly from the junction between each side wall 18, 20 and the seat and seat back portions 14 and 16.

The base 12 has a pair of upstanding walls 26 and 28 spaced apart by a greater distance than the beams 22 and 24 of the body 10. The base 12 also has a pair of upwardly projecting support members 30 and 32 spaced apart by a distance less than the beams 22 and 24 and carrying a pair of mutually aligned stub axles 34 and 36 which are journaled in holes in the beams 22 and 24 so as to pivotally connect the body 10 to the base 12. A recline mechanism (not shown), which may be as described in EP-A-0732235, controls angular movement of the body 10 relative to the base 12.

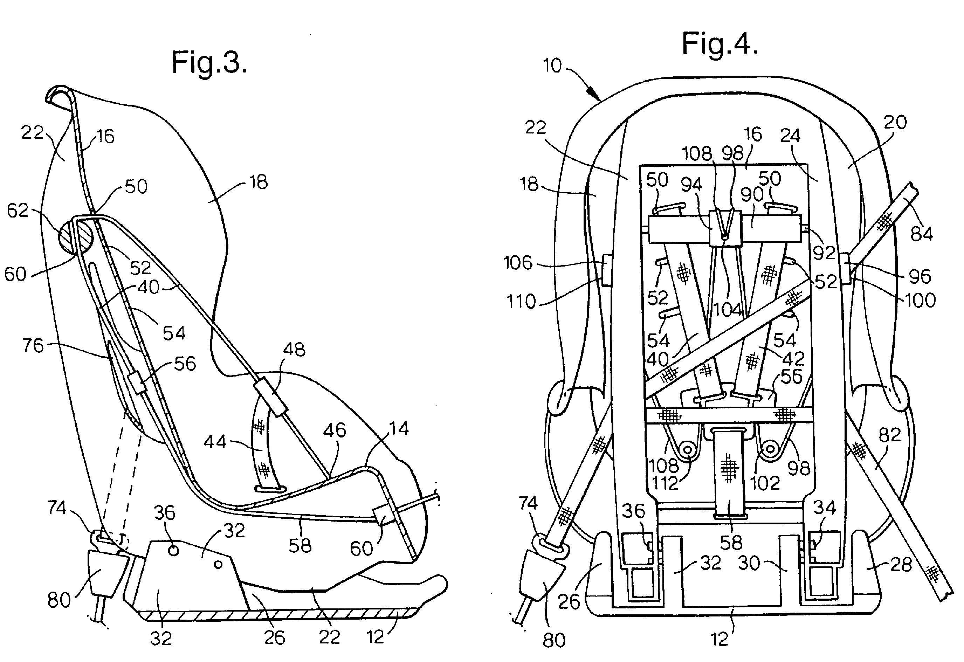

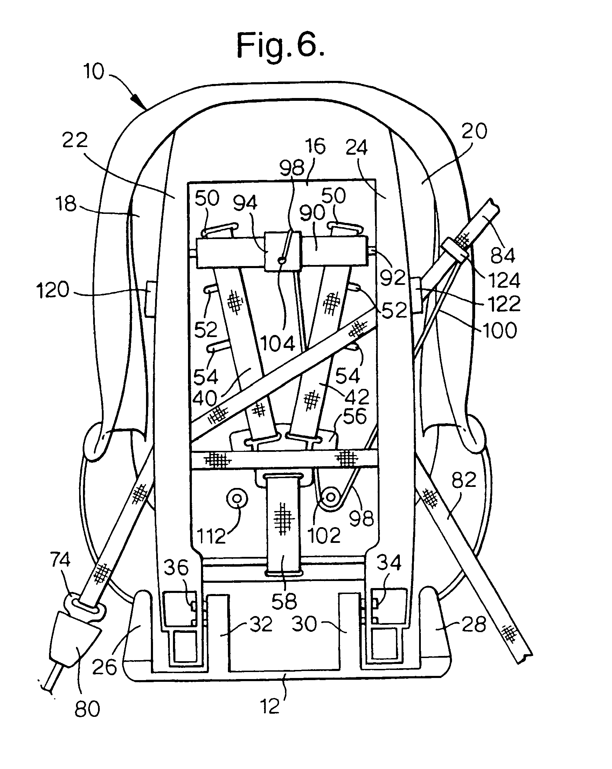

The body 10 is fitted with a conventional harness for a child occupant, consisting of a pair of shoulder straps 40 and 42, a pair of lap straps of which the lap strap 44 is visible in Figure 3, and a crutch strap 46. The straps 40, 42, 44 and 46 are interconnected by a buckle 48. The seat back portion 16 has three sets of slots 50, 52 and 54 to provide alternative positions for attaching the shoulder straps 40 and 42. Behind the seat back 16, the shoulder straps 40 and 42 are connected to a yoke 56 which is in turn connected to an adjuster strap 58 extending to a strap adjuster 60 mounted on the seat body 10 below the front edge of the seat portion 14.

In accordance with the invention, the paths of the shoulder straps 40 and 42, between the slots 50 and the yoke 56, are through respective diametrically extending slots 60 (Figure 3) in a roller 62 which is secured to an axle 64. The axle 64 is journaled on the beams 22 and 24 and has outwardly projecting ends, each of which carries a respective pulley 66, 68. Each pulley 66, 68 has a respective diametrically extending, open-sided slot 70, 72 extending substantially at right angles to the slots 60 in the roller 62.

When the child seat is to be installed on a vehicle seat, the tongue 74 of the vehicle seat belt is passed through respective openings 76 and 78 in the beams 22 and 24. The tongue 74 is then inserted into its buckle 80. The lap strap 82 and the shoulder strap 84 thus both pass through the openings 76 and 78. The shoulder strap 84 is pulled tight, so as to take all slack out of the lap strap 82, and secured by a manually engageable clamp 86 which is mounted on the outer face of the beam 24 in alignment with the upper end of the opening 78 therein. The clamp 86 may be as described in EP-A-0326265.

After emerging from the clamp 86, the shoulder strap 84 is lead through the slot 70 in the pulley 66, as can best be seen in Figures 1 and 2. A turnbuckle catch 88 on the end face of the pulley 66 is moved counter-clockwise from the orientation shown in Figure 2 to a position in which it extends across the slot 70 so as to retain the shoulder strap 84 therein.

After the child seat has been installed on the vehicle seat, a child may be placed in the seat body 10. After the harness has been fitted and the buckle 48 fastened, the adjuster strap 58 is pulled outwards through the adjuster 60 to tighten the harness. The roller 62 may be spring-biased in the counter-clockwise direction (as viewed in Figure 3) to a position in which the slot 60 is horizontal. Tightening the child harness causes clockwise rotation of the roller 62. The resulting movement of the pulleys 66 and 68 (which draws additional shoulder strap webbing from the vehicle seat belt retractor) can be used to provide a visual indication that the child harness has been tightened adequately.

In the event of a front-impact accident, the child seat 10 starts to move forwards relative to the vehicle before the body of a child occupant moves forwards relative to the child seat 10. The resulting tension in the shoulder strap 84 causes the pulley 66 and, with it, the cylindrical member 62, to turn through 90° in the counter-clockwise direction as viewed in Figure 2, thus wrapping part of the shoulder straps 40 and 42 of the child harness round the cylinder 62 and pulling the child firmly back against the seat back 16 of the child seat. This reduces undesirable forward head excursion. Since the diameter of the pulleys 66 and 68 is larger than that of the roller 62, the shoulder straps 40 and 42 remain wound on the roller 62 even when the child's body has moved forwards to its maximum excursion.

The roller 62 may be provided with a ratchet to prevent motion in the clockwise direction, in which case the diameter of the pulleys 66 and 68 need not be larger than that of the roller 62. However, with this arrangement, it is not possible for the roller 62 to be spring-biased in the counter-clockwise direction in order to provide a visual indication that the child harness has been tightened adequately.

If the vehicle in which the child seat is installed is equipped with a pyrotechnic pretensioner (or other similar stored-energy device) for the vehicle seat belt, actuation of such pretensioner in an accident will cause the tension in the shoulder strap 84 of the vehicle seat belt to turn the pulley 66 through 90° before the child seat body 10 starts to move forwards, thus tightening the shoulder straps 40 and 42 of the child seat harness to hold the child firmly back in the seat at the same time as the child seat body 10 is pulled backwards against the vehicle seat by the shoulder strap 84.

Instead of being routed through the slots 50, the shoulder straps 40 and 42 of the child harness may be routed to the roller 62 through either the slots 52 or the slots 54. It is preferable for the roller 62 to be positioned level with the highest slots 50 because the need to pull the child's body firmly back into the child seat 10 is greater for a larger child than for a relatively small one.

The clamp 86 may be replaced by a lock-off device having a cam bar, as described in EP-A-0200411, located in the slot 70 in the pulley 66. The pulley 66 may be held in the orientation shown in Figures 1 and 2 by a frangible link so as to prevent tension in the lap strap 82 causing rotation of the pulley 66 in normal use. The frangible link is arranged to fail under the load imposed during an accident.

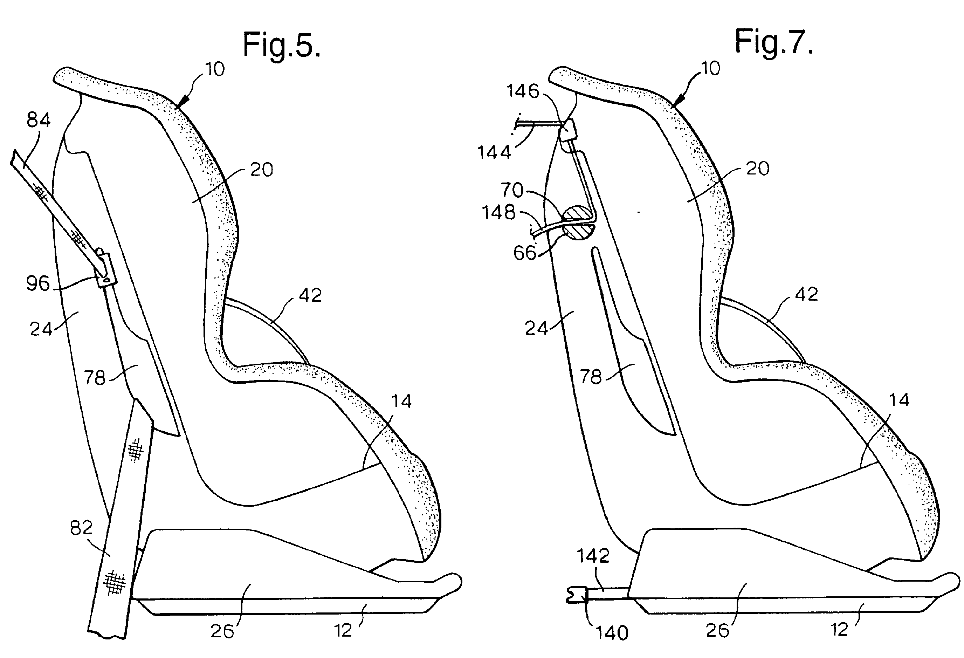

Figures 4 and 5 illustrate another embodiment of the invention. Since most of the parts of the seat shown in Figures 4 and 5 are identical to corresponding parts shown in the seat shown in Figures 1 and 2, they are denoted by the same reference numerals and will not be described again in detail. In Figures 4 and 5, the cylindrical member 62 is replaced by a cylindrical member 90 which has diametrically extending slots for the shoulder straps 40 and 42 of the child harness, similar to the slot 60 of Figures 1 to 3. The cylindrical member 90 is mounted on an axle 92 which is journaled in the beams 22 and 24 but does not project beyond the outside faces thereof. The cylindrical member 90 also carries a central pulley 94.

A manually engageable clamp 96 for the shoulder strap 84 of the vehicle seat belt is mounted on the outer face of the beam 24 a short distance below the upper end of the opening 78 therein. The clamp 96, which may be as described in EP-A-0326265, is secured to the beam 24 by frangible means, such as plastic rivets arranged to yield when the force thereon extends a value unlikely to be encountered except in an accident. A flexible cable 98, such as a stranded steel wire, has one end 100 secured to the clamp 96. From there, it extends through the opening 78, round a guide pulley 102 mounted on the rear surface of the seat back 16, and thence round the pulley 94 to an anchorage 104 thereon. In the event of a front-impact accident, the load on the shoulder strap 84 of the vehicle seat belt pulls the clamp 96 away from the beam 24, breaking the frangible means. The shoulder strap 84 moves up to the top of the opening 78. The resulting movement of the flexible cable 98 causes angular movement of the cylindrical member 90 so as to tighten the shoulder straps 40 and 42 of the child harness.

A second clamp 106, similar to the clamp 96, is mounted on the beam 22 on the other side of the seat. A flexible cable 108 has one end 110 secured to the clamp 106. The cable 108 is led round a guide pulley 112 and round the drum 94 to the anchorage point 104. The provision of two clamps 96 and 106 permits the seat to be used on either side of a vehicle.

Figure 6 shows a modification of the seat shown in Figures 4 and 5 applicable for use where the vehicle shoulder strap 84 of the vehicle seat belt is attached to a pretensioner. The clamps 96 and 106 have been replaced by lock-off devices 120 and 122 which are permanently secured to the beams 22 and 24 and which are as described in EP-A-0200411, i.e. they block movement of the vehicle shoulder strap 84 towards the buckle tongue 74 while allowing movement in the opposite direction. The end 100 of the cable 98 is attached to a clamp 124, which is secured to the shoulder strap 84 above the lock-off device 122 but is not otherwise attached to the child seat. In the event of actuation of the pretensioner, the shoulder strap 84 is pulled upwardly through the lock-off device 122 and the clamp pulls on the cable 98, causing rotation of the cylindrical member 90 to tighten the shoulder straps 40 and 42 of the child harness.

When it is desired to use the seat child seat of Figure 6 on the other side of the vehicle, with the vehicle shoulder strap engaged by the lock-off device 120, the clamp 124 is unthreaded from the slot 78 in the beam 24 and threaded through the slot 76 in the beam 22. The cable 98 is lead round the pulley 112 instead of round the pulley 98.

Figure 7 shows a child seat similar to the seat shown in Figures 1 to 3, but equipped with a pair of buckles 140 mounted on rigid links 142 projecting from the rear of the base 12 for engagement with rigid anchorage units on a vehicle as specified in ISO Standard ISO 13216-1:1999 Road Vehicles - Anchorages in Vehicles and Attachments for Child Restraint Systems - Part 1: Seat Bight Anchorages and Attachments. The child seat is also equipped with a V-shaped upper tether strap 144 of the type described in US-A-5630645. The ends of the tether strap extend round belt guides 146 near the top of the seat body 10 and thence through the slots 70 and 72 in the pulleys 66 and 68 respectively. Each slot 70, 72 contains a lock-off device of the type described in EP-A-0200411 arranged to block movement of the strap 144 towards the corresponding belt guide 146. Consequently, the tether strap 144 can be tightened by pulling on either end 148.

The pulleys 66 and 68 of Figure 7 may be replaced by a single central pulley on the cylindrical member 62 to which a single tether strap is connected. Since this pulley is not accessible when the child seat is in position on a vehicle seat, it is necessary to provide a separate adjuster for tightening the tether strap.

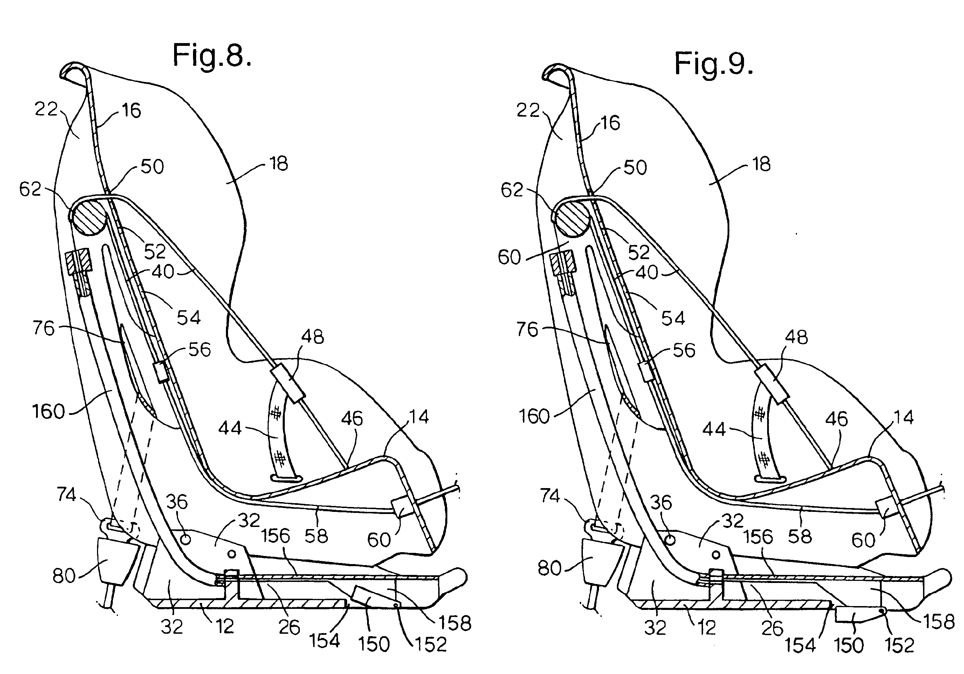

Figures 8 and 9 show another child seat similar to that shown in Figures 1 to 3. A foot 150 is mounted on a pivot axle 152 in an opening 154 in the base 12. A guide wall 156 extends above the opening 154. A wedge 158 is slidably mounted between the guide wall 156 and the foot 150 for movement between the position shown in Figure 8, in which the foot 150 is retracted into the base, and the position shown in Figure 9, in which the foot 150 projects downwardly below the base. In the latter position, the foot compresses the vehicle seat cushion below the child seat, thus reducing the extent of downward movement of the front part of the child seat.

The wedge 155 is coupled to one end of a Bowden cable 160, the other end of which is wound on the cylindrical member 62. Rotation of the cylindrical member 62, as described above with reference to Figures 1 to 3, thus causes movement of the wedge 158 from the position shown in Figure 8 to the position shown in Figure 9. Return of the wedge to its original position is prevented by a ratchet mechanism (not shown).

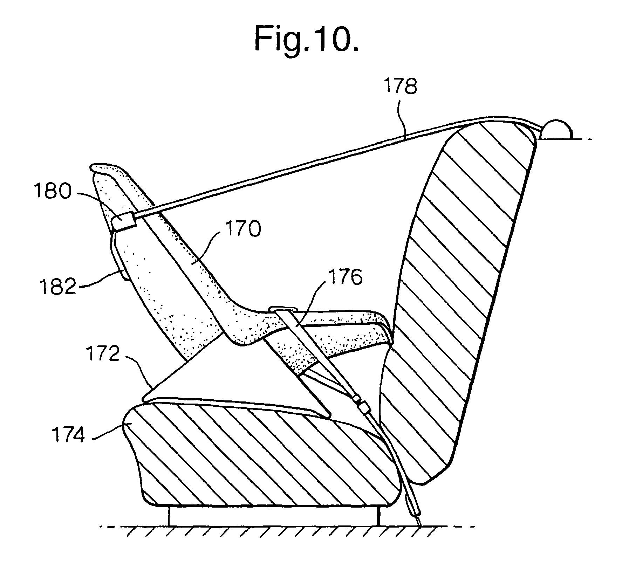

Figure 10 shows the application of the invention to a rearward facing child seat 170 having a base 172 resting on a vehicle seat 174 and secured in place by the lap strap 176 and shoulder strap 178 of a vehicle seat belt. The child seat 170 is equipped with a harness (not shown) similar to that described in EP-A-1006017. A manually actuable clamp 180, similar to the clamps 96 and 106, is secured to one side of the seat back 182 of the child seat 170 by frangible means such as plastic rivets. The clamp 180 is coupled to a mechanism similar to that described with reference to Figures 4 and 5. A second similar clamp (not shown) is provided on the other side of the seat 170.

Any of the mechanisms described above may be used with a rearward facing seat.

Figure 11 shows another rearward facing child seat 200 having a base 202 resting on a vehicle seat 204 and secured in place by a lap strap 206 and a shoulder strap 208 of a vehicle seat belt. An auxiliary panel 210 has a hinge 212 extending along its bottom edge. The hinge 212 is secured to the seat back 214 of the seat 200. In normal use, the panel 210 abuts against the seat back 214.

A belt guide 216 for the shoulder strap 208 of the vehicle seat belt is secured on one end of a piston 218 which is slidably mounted in a hole in the seat back 214 so that its other end abuts against the inner surface of the auxiliary panel 210. The belt guide 216 and piston 218 are biased outwardly by a compression spring 220 so as to permit the auxiliary panel 210 to abut against the seat back 214.

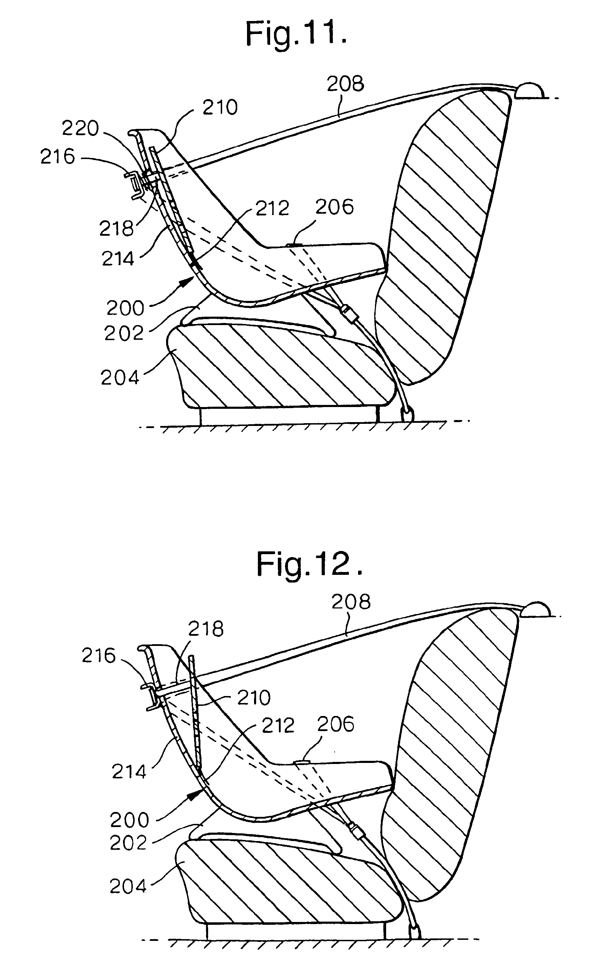

In the event of an accident causing increased tension in the shoulder strap 208, the belt guide 216 and piston 218 are pushed inwardly through the seat back 214, against the action of the spring 220, pushing the auxiliary panel 210 to the position shown in Figure 12. This puts a child occupant of the seat in a more upright position so that the seat is better placed to counteract the effect of horizontal inertial forces on the child's head.

The spring 220 may be replaced by a frangible link which is arranged to break in the event of an accident. With this arrangement, the auxiliary panel 210 remains in the position shown in Figure 12 after tension in the shoulder strap 208 has reduced.

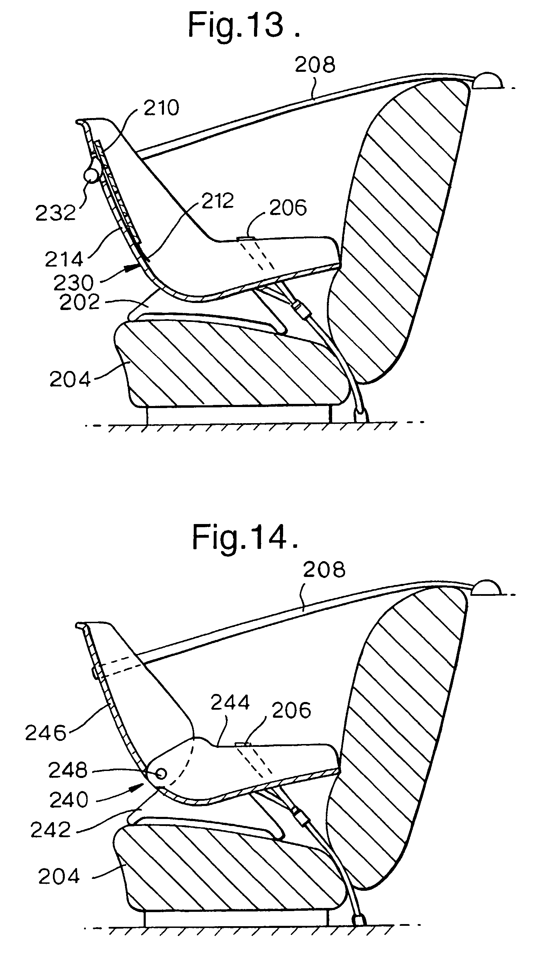

Figure 13 shows a seat 230 which is a modified version of the seat 200 of Figures 11 and 12. Equivalent parts are denoted by the same reference numerals and will not be described in detail. In place of the belt guide 216 and piston 218, the auxiliary panel 210 is driven to its deployed position in the event of an accident by a cam 232 which is mounted for rotation about a horizontal axis and coupled to pulleys (not shown), similar to the pulleys 66 and 68 of Figures 1 to 3. The shoulder strap 208 passes through the slot in one such pulley.

Figure 14 shows a rearward facing child seat 240 mounted on a base 242 which rests on the vehicle seat 204 and is held in place by the lap strap 206 and the shoulder strap 208 of the vehicle seat belt. The body of the seat 240 is formed in two parts. A seat portion 244 is mounted on the base 242. A seat back 246 is pivotally mounted on the seat portion 244 by means of a pivot axle 248, with sufficient friction to hold the seat back 246 in the position illustrated. In the event of an accident causing increased tension in the shoulder strap 208, this friction is overcome so that the seat back 246 pivots about the axle 248 to a more upright position. A stop (not shown) limits the extent of such forward movement.

## Claims

1. A child safety seat comprising a seat body (10) having a seat portion (14) and a seat back portion (16), a moveable part (40, 42, 158, 210, 246) and a link member (84, 144, 178, 208) for connecting the seat body (10) to a vehicle body, **characterised in that** movement of the link member (84, 144, 178, 208) relative to the seat body (10), occurring in the event of an accident involving the vehicle, is automatically operative to cause movement of the part (40, 42, 158, 210, 246) of the child seat relative to the child seat body (10) so as to put the child seat in a better condition to protect a child occupant.

2. A child safety seat according to claim 1, further comprising drive means (62, 90, 218, 232) acting on said part (40, 42, 158, 210, 246) of the child seat in response to movement of the link member (84, 144, 178, 208) relative to the seat body (10).

3. A child safety seat according to claim 2, wherein the link member comprises a flexible strap (84, 144, 178, 208).

4. A child safety seat according to claim 3, wherein the flexible strap comprises a shoulder strap (84, 178, 208) of a vehicle seat belt.

5. A child safety seat according to claim 3, wherein the flexible strap comprises a tether strap (144) adapted to extend from the upper region of the child seat back (16) to a fixed point on a vehicle.

6. A child safety seat according to claim 3, 4 or 5, wherein the drive means includes a pulley (66, 68) having a diametrically extending slot (70, 72) through which the strap (84, 144) extends.

7. A child safety seat according to any of claims 2 to 5, having a harness secured to the seat body (10) for engaging round the torso of a child occupant of the seat, wherein the harness includes at least one strap (66, 68) projecting through a slot (50, 52, 54) in the seat body (10), and the drive means (62, 90) is arranged to cause tightening of the child harness.

8. A child safety seat according to claim 7, wherein the drive means comprises a cylindrical member (62, 90) journaled for rotation about a horizontal axis located behind the seat back (16) and having diametrically extended slots (60) through which the shoulder straps (40, 42) of the child harness project.

9. A child safety seat according to any preceding claim, wherein the link member (84) is secured in a clamp (96, 106, 124) which is connected by a flexible member (100) to said drive means (90).

10. A child safety seat according to claim 9, wherein the clamp (96, 106) is attached to the child seat by a frangible link which is arranged to yield in the event of an accident.

11. A child safety seat according to claim 1 or 2, wherein the link member (178, 208) is arranged to cause movement of at least part of the seat back relative to the seat body (10).

12. A child seat according to claim 11, adapted to face rearwardly in a vehicle, wherein the link member (178, 208) is arranged to cause pivotal movement of at least part (210, 246) of the seat back rearwardly in the vehicle about its bottom edge (212, 248).

13. A child safety seat according to claim 11 or 12, wherein the link comprises a shoulder strap (178, 208) of a vehicle seat belt.

## Patentansprüche

1. Kindersicherheitssitz mit einem Sitzkörper (10) mit einem Sitzabschnitt (14) und einem Sitzlehnenabschnitt (16), einem beweglichen Teil (40, 42, 158, 210, 246) und einem Kopplungselement (84, 144, 178, 208) zum Verbinden des Sitzkörpers (10) mit einer Fahrzeugkarosserie, **dadurch gekennzeichnet, dass** eine Bewegung des Kopplungselements (84, 144, .178, 208) relativ zum Sitzkörper (10), wie sie bei einem Unfall auftritt, an dem das Fahrzeug beteiligt ist, automatisch so wirkt, dass sie zu einer Bewegung des Teils (40, 42, 158, 210, 246) des Kindersitzes relativ zum Kindersitzkörper (10) in solcher Weise führt, dass der Kindersitz in einen besseren Zustand zum Schützen eines Kindinsassen gebracht wird.

2. Kindersicherheitssitz nach Anspruch 1, ferner mit einer Antriebseinrichtung (62, 90, 218, 232), die auf eine Bewegung des Kopplungselements (84, 144, 178, 208) relativ zum Sitzkörper (10) auf den genannten Teil (40, 42, 158, 210, 246) des Kindersitzes wirkt.

3. Kindersicherheitssitz nach Anspruch 2, bei dem das Kopplungselement ein flexibles Band (84, 144, 178, 208) aufweist.

4. Kindersicherheitssitz nach Anspruch 3, bei dem das flexible Band ein Schulterband (84, 178, 208) eines Fahrzeugsitzgurts aufweist.

5. Kindersicherheitssitz nach Anspruch 3, bei dem das flexible Band über ein Halteband (144) verfügt, das so ausgebildet ist, dass es sich vom oberen Bereich der Kindersitzlehne (16) zu einem festen Punkt an einem Fahrzeug erstreckt.

6. Kindersicherheitssitz nach Anspruch 3, 4 oder 5, bei dem die Antriebseinrichtung über eine Riemenscheibe (66, 68) mit einem sich diametral erstreckenden Schlitz (70, 72) verfügt, durch den sich das Band (84, 144) erstreckt.

7. Kindersicherheitssitz nach einem der Ansprüche 2 bis 5, mit einem am Sitzkörper (10) befestigten Geschirr für Kontakt um den Rumpf eines Kindinsassen des Sitzes, wobei das Geschirr über mindestens ein :Band (66, 68) verfügt, das durch einen Schlitz (50, 52, 54) im Sitzkörper (10) hindurch steht, und wobei die Antriebseinrichtung (62, 90) so ausgebildet ist, dass sie für ein Anziehen des Kindergeschirrs sorgt.

8. Kindersicherheitssitz nach Anspruch 7, bei dem die Antriebseinrichtung über ein zylindrisches Element (62, 90) verfügt, das gelenkig für eine Drehung um eine hinter der Sitzlehne (16) liegende horizontale Achse angebracht ist, und mit sich diametral erstreckenden Schlitzen (60), durch die die Schulterbänder (40, 42) des Kindergeschirrs hindurch stehen.

9. Kindersicherheitssitz nach einem der vorstehenden Ansprüche, bei dem das Kopplungselement (64) in einer Klemme (96, 106, 124) befestigt ist, die durch ein flexibles Element (100) mit der Antriebseinrichtung (90) verbunden ist.

10. Kindersicherheitssitz nach Anspruch: 9, bei dem die Klemme (96, 106) durch ein zerbrechliches Koppelstück, das so ausgebildet ist, dass es bei einem Unfall nachgibt, am Kindersitz befestigt ist.

11. Kindersicherheitssitz nach Anspruch 1 oder 2, bei dem das Kopplungselement (178, 208) so ausgebindet ist, dass es für eine Bewegung zumindest eines Teils der Sitzlehne relativ zum Sitzkörper (10) sorgt.

12. Kindersitz nach Anspruch 11, der so ausgebildet ist, dass er in einem Fahrzeug nach hinten zeigt, wobei das Kopplungselement (178, 208) so ausgebildet ist, dass es für eine Schwenkbewegung zumindest eines:Teils (210, 246) der Sitzlehne um ihren Unterrand (212, 248) nach hinten im Fahrzeug sorgt.

13. Kindersicherheitssitz nach Anspruch 11 oder 12, bei dem das Koppelstück über ein Schulterband (178, 208) eines Fahrzeugsitzgurts verfügt.

## Revendications

1. Siège de sécurité pour enfant comprenant un corps (10) de siège comprenant lui-même une partie (14) formant assise et une partie (16) formant dossier de siège, une partie mobile (40, 42, 158, 210, 246) et un organe de liaison (84, 144, 178, 208) pour relier le corps (10) de siège à une carrosserie de véhicule, **caractérisé en ce qu'**un déplacement de l'organe de liaison (84, 144, 178, 208) par rapport au corps (10) de siège, se produisant dans le cas d'un accident impliquant le véhicule, est automatiquement réalisé pour provoquer un déplacement de la partie (40, 42, 158, 210, 246) du siège pour enfant par rapport au corps (10) de siège pour enfant de manière à mettre le siège pour enfant dans une meilleure condition pour protéger un enfant occupant le siège.

2. Siège de sécurité pour enfant selon la revendication 1, comprenant de plus des moyens d'entraînement (62, 90, 218, 232) agissant sur ladite partie (40, 1542, 158, 210, 246) du siège pour enfant en réponse au déplacement de l'organe de liaison (84, 144, 178, 208) par rapport au corps (10) de siège.

3. Siège de sécurité pour enfant selon la revendication 2, dans lequel l'organe de liaison comprend une sangle flexible (84, 144, 178, 208).

4. Siège de sécurité pour enfant selon la revendication 3, dans lequel la sangle flexible comprend une sangle d'épaule (84, 178, 208) d'une ceinture de sécurité de véhicule.

5. Siège de sécurité pour enfant selon la revendication 3, dans lequel la sangle flexible comprend une sangle d'attachement (144) adaptée pour s'étendre depuis la zone supérieure du dossier (16) de siège pour enfant jusqu'à un point fixe sur un véhicule.

6. Siège de sécurité pour enfant selon la revendication 3, 4 ou 5, dans lequel les moyens d'entraînement comprennent une poulie (66, 68) comprenant une fente s'étendant diamétralement (70, 72) au travers de laquelle s'étend la sangle (84, 144).

7. Siège de sécurité pour enfant selon l'une quelconque des revendications 2 à 5, comprenant un harnais fixé au corps (10) de siège, destiné à venir s'engager autour du torse d'un enfant occupant le siège, le harnais comprenant au moins une sangle (66, 68) engagée au travers d'une fente (50, 52, 54) aménagée dans le corps (10) de siège, les moyens d'entraînement (62, 90) étant agencés de manière à provoquer le serrage du harnais d'enfant.

8. Siège de sécurité pour enfant selon la revendication 7, dans lequel les moyens d'entraînement comprennent un organe cylindrique (62, 90) monté pivotant de manière à effectuer une rotation autour d'un axe horizontal situé derrière le dossier (16) de siège et comprenant des fentes (60) s'étendant diamétralement, au travers desquelles s'étendent les sangles d'épaule (40, 42) du harnais d'enfant.

9. Siège de sécurité pour enfant selon l'une quelconque des revendications précédentes, dans lequel l'organe de liaison (84) est maintenu dans une pince (96, 106, 124) qui est reliée par un organe flexible (100) auxdits moyens d'entraînement (90).

10. Siège de sécurité pour enfant selon la revendication 9, dans lequel la pince (96, 106) est fixée au siège pour enfant par un lien frangible qui est agencé pour se rompre en cas d'accident.

11. Siège de sécurité pour enfant selon la revendication 1 ou 2, dans lequel l'organe de liaison (178, 208) est disposée pour provoquer un déplacement d'au moins une partie du dossier de siège par rapport au corps (10) de siège.

12. Siège pour enfant selon la revendication 11, adapté à être placé dans un véhicule en étant tourné vers l'arrière de ce véhicule, dans lequel l'organe de liaison (178, 208) est agencé pour provoquer un déplacement en pivotement d'au moins une partie: (210, 246) du dossier de siège vers l'arrière dans le véhicule autour de son bord inférieur (212, 248).

13. Siège de sécurité pour enfant selon la revendication 11 ou 12, dans lequel le lien comprend une sangle d'épaule (178, 208) d'une ceinture de sécurité de véhicule.
